# EUROPÄISCHE PATENTSCHRIFT

(11) **EP 2 283 203 B1**
(45) Veröffentlichungstag und Bekanntmachung des Hinweises auf die Patenterteilung: **05.07.2017**
(21) Anmeldenummer: 09756944.6
(22) Anmeldetag: 26.05.2009
(51) Int. Cl.: E21B 17/042, F16L 15/06

(54) **ROHRVERBINDUNG**
PIPE CONNECTION
RACCORD DE TUYAUTERIE

(30) Priorität: 03.06.2008 AT 8942008
(43) Veröffentlichungstag der Anmeldung: 16.02.2011
(73) Patentinhaber: Voestalpine Tubulars Gmbh & Co Kg, 8652 Kindberg-Aumühl (AT)
(72) Erfinder: TEODORIU, Catalin, Ploiesti (Prahova) (RO); FRITZ, Gernot, A-8670 Krieglach (AT)
(74) Vertreter: Wildhack & Jellinek
(86) Internationale Anmeldenummer: PCT/AT2009/000219
(87) Internationale Veröffentlichungsnummer: WO 2009/146475

(56) Entgegenhaltungen:
- WO-A1-03/048623
- WO-A1-2007/017082
- GB-A- 2 366 844
- US-A- 3 870 351
- US-A- 4 692 988
- US-A1- 2001 027 867

## Beschreibung

Die Erfindung bezieht sich auf eine Rohrverbindung, insbesondere auf eine gasdichte Rohr-Schraubverbindung, bei welcher die Teile im Verbindungsbereich mittels Fügen gemäß DIN 8593 durch Anpressen und Einpressen verbunden sind, bestehend aus einem Innenrohrteil und einem Außenrohrteil oder zwei Innenrohrteilen mit einer Außenmuffe.

Rohre, zumeist nahtlose Rohre, welche aus unterschiedlichen Werkstoffen gebildet sein können, werden zur Leitung von Ölfeld- und/oder Gasfeldprodukten vertikal und horizontal auch über große Distanzen eingesetzt und erfordern der hohen Beanspruchung wegen hohe Dichtgüte der Verbindungen im praktischen Betrieb bzw. Einsatz.

Eine bereits langzeitig angewendete Rohrverbindung, die im Wesentlichen den Stand der Technik hinsichtlich der geometrischen Grundkonzeption darstellt, ist derart gebildet, dass ein Innenrohrteil und ein Außenrohrteil kegelstumpfförmige, aneinander anliegende Dichtflächen mit einer Neigung zueinander in distaler Richtung des Innenrohrteiles von etwa 1:10 aufweist, die mit in Axrichtung gegengerichteten, kegelstumpfförmigen Anschlagflächen zusammenwirken. Eine Dichtwirkung kann dabei durch ein gegenseitiges, axiales aneinander Anpressen (Voll-in-Eingriff-Setzen) der Rohrenden z.B. mittels Gewindeverschraubung und dergleichen erreicht werden.

Um die Dichtheit bzw. die Güte der Abdichtung der Rohrverbindung bei den im Feld gegebenen Beanspruchungen an die Rohrleitungen zu verbessern, aber auch um bei einer Demontage und Wiedermontage von Rohrkomponenten eine Aufrechterhaltung der Dichtgüte der Rohrverbindungen zu erreichen, wurden schon eine Vielzahl von geometrischen Ausführungsformen mit besonderer Gestaltung der Dicht- und Anschlagflächen der Verbindung vorgeschlagen. Komplexe Dichtflächenformierungen sind jedoch zumeist mit höheren Aufwendungen für die spanabhebende Bearbeitung der Verbindungsbereiche der Rohrenden und mit verringerter Wirtschaftlichkeit der Fertigung verbunden.

Die US 7 334 821 B2 offenbart eine Rohrverbindung mit einer tonnenförmigen, im Schnitt konvexen, Dichtfläche des Rohrinnenteiles und einem daran anschließenden, vorragenden Fortsatz mit einer distalen Anschlagfläche. Derart sollen im vollen Eingriff der Rohrverbindung die Pressflächen der Rohrkomponenten eine erhöhte Konizität erhalten und eine verbesserte Dichtwirkung erbringen. Der Fertigungsaufwand zur Erstellung der komplex geformten Dichtbereiche erscheint jedoch hoch.

*Gerundete Anschlagflächen, wie dies die* WO 2007/017082 A1 *offenbart, sollen bei einem Zusammenbringen und einem Verschrauben der Gewindeteile gegebenenfalls eine axiale Druckbeaufschlagung der oft gerundeten Presssitzflächen über den Umfang ergeben. Diese Ausführungsform der Anschlagflächen kann auf einfache Weise eine gegebenenfalls selbständige Axzentrierung der Rohre bei einem Zusammenbau beziehungsweise Zusammenschrauben auch durch ungeübtes Personal bewirken. Gemäß* US 4,692,988 *wird vorgeschlagen, die Gewindeteile auch bei einem dichtenden Einschrauben zu schützen, indem ein Gewindeteil mit einem trockenen Schmiermittel aus beispielsweise* Molybdändisulfid *und der kooperierende Teil mit einem flüssigen Schmiermittel behandelt wird.*

Aufbauend auf der wesentlichen, geometrischen Konzeption einer Rohrverbindung gemäß dem Stand der Technik liegt der Erfindung die Aufgabe zugrunde, bei hoher Wirtschaftlichkeit der Herstellbarkeit eine neuartige Rohrverbindung anzugeben, welche verbesserte Gebrauchseigenschaften der Rohrleitungen im praktischen Feldeinsatz bewirkt und für eine Demontage und Wiedermontage von Leitungen förderlich ist.

Die verbesserten Gebrauchseigenschaften der Rohrleitungen betreffen insbesondere den Erhalt der Dichtheit der jeweiligen Rohrverbindung sowohl bei hohem Innendruck als auch bei hohem Außendruck sowie bei überlagerter Zug-, Druck- und Biegebeanspruchung des Rohrstranges, wobei sogenannte Fresserscheinungen im Verbindungsbereich minimiert und ein Lösen und ein erneut Voll-in-Eingriff-Bringen der Verbindung verbessert werden sollen.

Die gestellte Aufgabe wird nach der Erfindung bei einer Rohrverbindung mit den Merkmalen von Anspruch 1 gelöst. Die mit der Erfindung erreichten Vorteile sind zusammenwirkend im Wesentlichen in einer Erhöhung der Flächenpressung an den Presssitzflächen und einer vorteilhaften Positionierung derselben, beabstandet zu den Anschlagflächen, zu sehen. Verbunden damit sind auch eine allgemeine Optimierung der Größe der örtlichen, mechanischen Materialbeanspruchungen im Verbindungsbereich und eine Vermeidung von Spannungsspitzen im Hinblick auf ein Auftreten von plastischen Verformungen und von Rissinitiation im Werkstoff.

Mittels umfangreichen Untersuchungen wurde gefunden, dass die Dichteigenschaft der erfindungsgemäßen Rohrverbindung bei Drücken über dem Nominalen und bei überlagerten Zug-, Druck- und Biegebeanspruchungen vollkommen erhalten bleibt.

Berechnungen nach der FE-Methode sowie Elastizitätsermittlungen haben ergeben, dass durch eine Geometrie gemäß der Erfindung im Verbindungsbereich und zwar mit einer Ausbildung eines Hohlraumes zwischen Presssitz- und Anschlagflächen, vielfach Vorteile erbringt.

Zum Einen sind durch den Hohlraum bei einer gegenüber dem Stand der Technik gleichen Längserstreckung die Verbindung der Presssitz- oder Dichtsitzflächen verkürzt bzw. verringert, was zu höheren Dichtflächendrücken führt.

Der berührungsfrei gestellte Übergang ergibt belastungskinetisch eine erhöhte, weitgehend homogene, spezifische Flächenpressung und somit die Dichtung an den Presssitzflächen, wobei durch eine axiale Beabstandung zu den Anschlagflächen bei einer Biegung des Systems nur tolerierbare Unterschiede in der örtlichen Flächenpressung entstehen. Gegebenenfalls überlagerte Zug- und Druckspannungen wirken sich nur geringfügig auf die Dichtheit der Verbindung aus, weil die Presssitzflächen eine geringe Neigung von ca. 1:10 haben.

Mit Vorteil wirkt der Hohlraum im Verbindungsbereich der Rohrteile als Schmiermitteltasche und verbessert eine Verteilung und verringert den Druck des Schmierstoffes beim dichtenden Zusammenbau einer Feldrohrleitung. Erfindungsgemäß ist der zwischen den Rohrteilen berührungsfrei gebildete Übergang der Verbindungsbereiche Presssitz und Anschlag durch eine koaxiale Ausnehmung aus der Innenwandfläche des Außenrohrteiles gebildet. Somit werden sowohl günstige mechanische Materialbeanspruchungen als auch die Dichtheit der Verbindung fördernde Spannungszustände erreicht.

Bei einem Eindrücken des Innenrohrteiles in den Außenrohrteil, bei einem Voll-in-Eingriff-Setzen der Verbindung, bilden sich hohe, im Wesentlichen radial gerichtete Kräfte im Bereich der Presssitzflächen aus, welche in diesem Bereich zu einer Aufweitung mit einer tangentialen, elastischen Dehnung des Werkstoffes der Außenrohrwandung führt.

Durch eine koaxiale Ausnehmung aus der Innenwandfläche des Außenrohrteiles im anschließenden Übergangsbereich und somit einer Berührungsfreistellung der Rohrteile im Bereich bis zu den Anschlagflächen hin, sind keine elastischen Dehnungen in der Tangentialrichtung der Außenrohrwandung mehr gegeben, jedoch wirken in dieser axial gerichtete Zugkräfte, die sich durch ein Aufpressen der Anschlagfläche des Innenrohres auf jene des Außenrohes ausbilden und eine elastische Dehnung in Axrichtung bewirken.

Im Verbindungsbereich sind derart erfindungsgemäß örtlich komplexe Spannungszustände weitestgehend reduziert, wobei erfindungsgemäß die Ausbildung eines Übergangsbereiches größere, elastische Dehnwerte erwirkt und die Dichtheit der Verbindung auch bei komplexen Beanspruchungen des Rohrstranges sicherstellt. Vorteilhafterweise weist die Ausnehmung im Übergangsbereich im Querschnitt ein eckenfreies Profil auf, weil dadurch Spannungsspitzen an der Innenoberfläche des Außenrohres weitestgehend vermieden und eine Rissinitiation und Dauerbruchgefahr ausgeschaltet sind.

Wenn der Innenrohrteil im Bereich des Überganges von der distal weitergeführten Presssitzfläche zur Anschlagfläche gerundet gebildet ist, so können örtliche Spannungsspitzen mit örtlichen plastischen Materialverformungen ausgeschaltet und die Kooperation der Anschlagflächen verbessert werden. Besonders gute Ergebnisse wurden mit einer Kantenrundung mit einem Radius von R = 0.9 bis 1.5 erreicht.

Mit Vorteil ist die koaxiale Ausnehmung im Außenrohrteil im Querschnitt von der Presssitzfläche zum Ausnehmungsprofil mit einem Übergangsradius von 0.5 bis 1.0 mm gebildet und bis zur Anschlagfläche kantenfrei ausgeformt. Derart werden im Grenzbereich von Presssitzfläche und Ausnehmung mit Sicherheit Druckspannungsspitzen vermieden.

Umfangreiche und gezielte Untersuchungen haben ergeben, dass der Quotient aus Länge des berührungsfrei gestellten Überganges zur Länge des wirksamen Presssitzes erfindungsgemäß einen Wert von 0.4 bis 1.7, vorzugsweise von 0.6 bis 1.5 haben soll, um optimale Dichtverhältnisse einer erfindungsgemäßen Rohrverbindung zu erreichen.

Dieser augenscheinlich breite Wertbereich ergab sich aus einer Einbeziehung aller üblichen Rohrdurchmesser.

Dimensionsbezogene Auswertungen legten offen, dass der Quotient für Rohre, sogenannten Futterrohre oder CASINGS, mit einem Außendurchmesser von größer 4 ½ Zoll *(entspricht 0.1143 m)* optimiert bei 0.4 bis 1.2, vorzugsweise bei 0.6 bis 1.0 liegt.

Hingegen wurde für Steig- oder Förderrohre, welche einen Außendurchmesser von kleiner 4 ½ Zoll *(entspricht 0.1143* m) bis zu 1.66 Zoll *(entspricht 0.0402 m)* und niedriger aufweisen, also bei sogenannten TUBINGS, optimierte Quotienten aus Länge des berührungsfrei gestellten Überganges zur Länge des Presssitzes von 0.9 bis 1.7, vorzugsweise von 1.1 bis 1.5 ermittelt.

Um eine günstige und hochwertig kompakte Ausführungsform der Rohrverbindung mit gesteigerter Dichtheit zu erreichen, weist der Außenrohrteil erfindungsgemäß eine Neigung der Presssitzfläche von etwa 1:10 bezogen auf den Durchmesser zur Anschlagflächen hin auf und die Anschlagfläche weist gegengerichtet einen Winkel Beta von β = 10° bis 20°, vorzugsweise von β = etwa 15° zur Axnormalen auf. Wenn, wie sich aus den Versuchen ergeben hat, die Presssitzflächen und/oder die Anschlagflächen eine Oberflächenrauigkeit von weniger als Ra = 3.2 µm, jedoch mehr als Ra = 0.4, gemessen als Mittelrauheitswert nach DIN 4777 ISO/DIN4287/1 haben, so ist weitgehend ohne einem sogenannten Fressen der Presssitzflächen eine hohe spezifische Druckbelastung anwendbar und eine weitgehende, uneingeschränkte Demontage der Rohrverbindung möglich. Es wird in dieser Hinsicht angenommen, dass in den Vertiefungen des rauen Oberflächenprofils in obigen Rauigkeitsgrenzen eine optimale Schmiermittelmenge positionierbar ist, um die gewünschten Eigenschaften zu erhalten.

Wirkungstechnisch kann eine Rohrverbindung gemäß der Erfindung durch unterschiedliche Mittel, die die Rohrteile axial zusammendrücken, voll in Eingriff gebracht werden. Mit Vorteil haben sich die bekannten Schraubverbindungen bewährt.

Mittels einer schematischen Zeichnung soll im Folgenden lediglich eine Ausführungsform einer erfindungsgemäßen Rohrverbindung dargestellt werden.

Es zeigt:

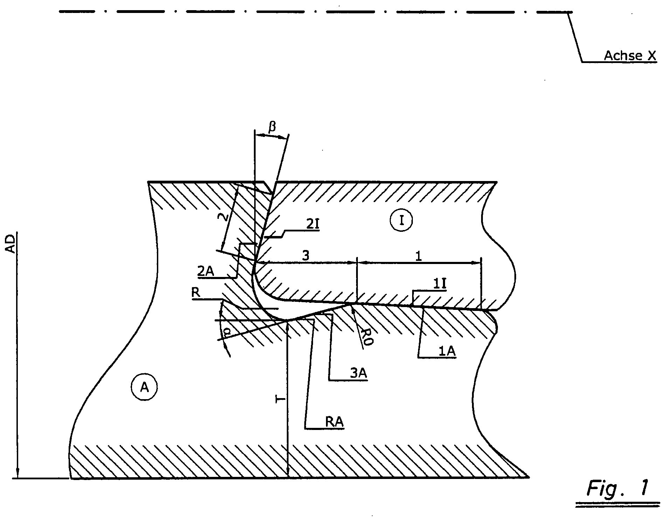

Fig. 1 eine Rohrverbindung in axialem Schnitt.

In Fig. 1 ist eine Rohrverbindung von einem Innenrohr **I** und einem Außenrohr **A** in axialem Schnitt gezeigt.

Im Verbindungsbereich der Rohre weist ein Innenrohrteil **I** eine Presssitzfläche **1I** auf, welche bezogen auf den Rohrdurchmesser distal mit einem Wert von 1:10 geneigt ist. Der Presssitzfläche **1I** distal folgend ist zu einer Rohrlängsachse **x** hin mit einem Winkel **β** von 15° gegen gerichtet geneigt eine Anschlagfläche **2I**, welche den Verbindungsbereich **3** mit einer stirnseitigen Dichtfläche und das Innenrohrende darstellt, ausgeformt.

Ein Außenrohrteil **A** liegt bei einer voll im Eingriff stehenden Rohrteilverbindung im Verbindungsbereich **1** proximal an der Presssitzfläche **1I** des Innenrohres mit der Presssitzfläche **A1** an.

Zwischen Verbindungsbereich **1**, welcher die Presssitzflächen **1I** und **1A** umfasst, und dem Bereich **2** mit den Anschlagflächen der Rohrteile ist ein Übergangsbereich **3** vorgesehen, in welchem eine Ausnehmung **RA** aus der Innenwand des Außenrohres **A** vorliegt, einen Hohlraum **R** zwischen den Rohrteilen **I** und A ausformt und die Teile in dieser Zone berührungsfrei stellt.

Im Außenrohrteil **A** ist der Grenzbereich zwischen Presssitzfläche **1A** und Ausnehmungsprofil **3A** mit einem Radius von 0.8 mm gerundet, wobei in der Folge die gesamte Innenwandfläche **3A** der koaxialen Ausnehmung **RA** bis zur Anschlagsfläche **2A** hin kantenfrei gerundet erstellt ist.

## Patentansprüche

1. Rohrverbindung, insbesondere gasdichte Rohr-Schraubverbindung, bestehend aus Innen- und Außenteilen (I, A), wobei die Innen- und Außenteile (I, A) ein Innenrohrteil (I) und ein Außenrohrteil (A) oder zwei Innenrohrteile (I) und eine Außenmuffe (A) sind, bei welcher Rohrverbindung die Teile im Verbindungsbereich mittels Fügens durch Einpressen und Anpressen verbunden sind, wobei die Rohrverbindung mit drei Bereichen erstellt ist, wobei die Verbindungsbereiche Presssitz (1) und Anschlag (2) der Innen- und Außenteilen (I, A) kooperierende, in Endenrichtung vom Innenrohrteil (I) zur Rohrachse (x) hin geneigte Presssitzflächen (1I, 1A) und stirnseitig zu diesen Presssitzflächen (1I, 1A) geneigte Anschlagflächen (2I, 2A) aufweisen, wobei die Presssitzflächen (1I,1A) und die Anschlagflächen (2I, 2A) gegengerichtet geneigte Kegelstumpfform aufweisen, der Außenteil (A) eine Neigung der Presssitzfläche (1I, 1A) von etwa 1:10 bezogen auf den Rohrdurchmesser aufweist und die Anschlagfläche (2I, 2A) einen Winkel Beta von 10° bis 20°, vorzugsweise von etwa 15°, zur Axnormalen hat und wobei der Übergang (3) von Presssitz (1) und Anschlag (2) der in Verbindung stehenden Teile für diese berührungsfrei mit einem koaxialen Zwischenraum bzw. Hohlraum (R) durch eine koaxiale Ausnehmung (RA) aus der Innenwandfläche (3A) im Außenteil (A) mit der Maßgabe gebildet ist, dass der Quotient aus Länge in Axrichtung des berührungsfrei gestellten Überganges (3) zur Länge des Presssitzes (1) einen Wert von 0.4 bis 1.7 ergibt.

2. Rohrverbindung nach Anspruch 1, **dadurch gekennzeichnet, dass** die Ausnehmung (RA) im Übergangsbereich (3) im Querschnitt ein eckenfreies Profil (3A) aufweist.

3. Rohrverbindung nach einem der Ansprüche 1 oder 2, **dadurch gekennzeichnet, dass** der Innenrohrteil (I) im Bereich des Überganges (3) von distal weitergeführter Presssitzfläche (1I) und Anschlagfläche (2I) gerundet gebildet ist.

4. Rohrverbindung nach einem der Ansprüche 1 bis 3, **dadurch gekennzeichnet, dass** die koaxiale Ausnehmung (RA) im Außenteil (A) im Querschnitt von der Presssitzfläche (1 A) zum Ausnehmungsprofil (3A) mit einem Übergangsradius (Ro) von 0.5 bis 1.0 mm (Ro = 0.5 bis 1.0) gebildet und bis zur Anschlagfläche (2A) kantenfrei ausgeformt ist.

5. Rohrverbindung nach einem der Ansprüche 1 bis 4, **dadurch gekennzeichnet, dass** der Quotient aus Länge des berührungsfrei gestellten Überganges (3) zur Länge des Presssitzes (1) einen Wert von 0.6 bis 1.5 ergibt.

6. Rohrverbindung nach Anspruch 1, **dadurch gekennzeichnet, dass** für CASING-Rohre gemäß API 5CT, das sind im Wesentlichen Futterrohre mit einem Außendurchmesser größer als 11,43 cm ( 4 ½ Zoll), der Quotient aus Länge des mit dem Innenrohrteil (I) berührungsfrei gestellten Überganges (3) zur Länge des Presssitzes (1) einen Wert von 0.4 bis 1.2, vorzugsweise von 0.6 bis 1.0 ergibt.

7. Rohrverbindung nach Anspruch 1, **dadurch gekennzeichnet, dass** für TUBING-Rohre gemäß API 5CT, das sind im Wesentlichen Steig- oder Förderrohre mit einem Außendurchmesser von 11,43cm (4 ½ Zoll) und kleiner, beispielsweise 4,02 cm (1.66 Zoll), der Quotient aus Länge des mit dem Innenrohrteil (I) berührungsfrei gestellten Überganges (3) zur Länge des Presssitzes (1) einen Wert von 0.9 bis 1.7, vorzugsweise von 1.1 bis 1.5 ergibt.

8. Rohrverbindung nach einem der Ansprüche 1 bis 7, **dadurch gekennzeichnet, dass** die Innen- und Außenteile einen Rohrwerkstoff aufweisen, der zumindest im Verbindungsbereich thermisch vergütet ist und eine erhöhte Werkstofffestigkeit aufweist.

9. Rohrverbindung nach einem der Ansprüche 1 bis 8, **dadurch gekennzeichnet, dass** die Presssitzflächen (1I, 1A) und/oder die Anschlagflächen (2I, 2A) eine Oberflächenrauigkeit nach E-Norm von weniger als Ra = 3.2 µm, jedoch mehr als Ra = 0.4 µm, bestimmt als Mittelrauheitswert nach DIN 4777 ISO/DIN4287/1 aufweisen.

10. Rohrverbindung nach einem der Ansprüche 1 bis 9, **dadurch gekennzeichnet, dass** das Fügen der Rohrteile mittels Schraubverbindung erstellt ist.

## Claims

1. A pipe connection, particularly a gas-tight pipe screw connection, consisting of inner and outer parts (I, A), wherein the inner and outer parts (I, A) are an inner pipe part (I) and an outer pipe part (A) or two inner pipe parts (I) and an outer collar (A), in which pipe connection the parts in the connecting region are connected by means of joining by way of contact-pressing and insert-pressing, wherein the pipe connection is established using three regions, wherein the connecting regions of the press fit (1) and stop (2) of the inner and outer parts (I, A) have cooperating press fit surfaces (1I, 1A) inclined in the end direction from the inner pipe part (I) toward the pipe axis (x) and at the front have stop surfaces inclined towards these press fit surfaces (1I, 1A), wherein the press fit surfaces (1I, 1A) and the stop surfaces (21, 2A) have a truncated cone shape inclined oppositely directed, the outer part (A) has an inclination of the press fit surface (1I, 1A) of approximately 1:10 in relation to the pipe diameter and the stop surface (2I, 2A) has an angle beta of 10° to 20°, preferably of approximately 15°, to the axis normal and wherein the transition (3) is formed by the press fit (1) and stop (2) of the connected parts for said parts without contact with a coaxial intermediate space or hollow space (R) through a coaxial recess (RA) from the inner wall surface (3A) in the outer part (A) subject to the condition, that the quotient of length in the direction of the axis of the transition made without contact (3) to the length of the press fit (1) yields a value of 0.4 to 1.7.

2. A pipe connection according to Claim 1, **characterized in that** the recess (RA) in the transition region (3) has a corner-free profile (3A) in the cross section.

3. A pipe connection according to any one of Claims 1 or 2, **characterized in that** the inner pipe part (I) in the region of the transition (3) from the distally extended press fit surface (1I) and stop surface (2I) has a rounded form.

4. A pipe connection according to any one of Claims 1 to 3, **characterized in that** the coaxial recess (RA) is formed in the outer part (A) in cross section from the press fit surface (IA) to the recess profile (3A) with a transition radius (Ro) of 0.5 to 1.0 mm (Ro = 0.5 to 1.0) and is formed edge-free up to the stop surface (2A).

5. A pipe connection according to any one of Claims 1 to 4, **characterized in that** the quotient of length of the transition (3) made without contact to the length of the press fit (1) yields a value of 0.6 to 1.5.

6. A pipe connection according to Claim 1, **characterized in that** for CASING pipes according to API 5CT, which are essentially casing pipes with an outer diameter greater than 11.43 cm (4½ inches), the quotient of length of the transition (3) made with the inner pipe part (I) without contact to the length of the press fit (1) yields a value of 0.4 to 1.2, preferably of 0.6 to 1.0.

7. A pipe connection according to Claim 1, **characterized in that** for TUBING pipes according to API 5CT, which are essentially riser pipes or conveyor pipes with an outer diameter of 11.43 cm (4½ inches) and smaller, for example 4.02 cm (1.66 inches), the quotient of length of the transition (3) made with the inner pipe part (I) without contact to the length of the press fit (1) yields a value of 0.9 to 1.7, preferably of 1.1 to 1.5.

8. A pipe connection according to any one of Claims 1 to 7, **characterized in that** the inner and outer parts have a pipe material, which is thermally tempered in the connection region and has an increased material strength.

9. A pipe connection according to any one of Claims 1 to 8, **characterized in that** the press fit surfaces (1I, 1A) and/or the stop surfaces (2I, 2A) have a surface roughness according to E-norm of less than Ra = 3.2 µm, however, more than Ra = 0.4 µm, determined as mean roughness value according to DIN 4777 ISO/DIN4287/1.

10. A pipe connection according to any one of Claims 1 to 9, **characterized in that** the joining of the pipe parts is produced by means of a screw connection.

## Revendications

1. Raccord de tube, plus particulièrement raccord vissé de tube étanche au gaz, constitué de parties internes et externes (I, A), les parties internes et externes (I, A) étant une partie tubulaire interne (I) et une partie tubulaire externe (A) ou deux parties tubulaires internes (I) et un manchon externe (A), dans lequel les parties sont reliées au niveau du raccordement à l'aide d'un assemblage par emmanchement et pression, le raccord de tube étant réalisé avec trois zones, les zones de raccordement comprenant un ajustement serré (1) et une butée (2) des parties internes et externes (I, A) des surfaces de sièges de pression (1I, 1A) coopérantes, inclinées dans la direction des extrémités de la partie tubulaire interne (I) vers l'axe du tube (x) et des surfaces de butée (2I, 2A) inclinées frontalement vers ces surfaces d'ajustement serré (1I, 1A), les surfaces d'ajustement serré (1I, 1A) et les surfaces de butée (2I, 2A) présentant des formes tronconiques inclinées dans des directions opposées, la partie externe (A) présentant une inclinaison de la surface d'ajustement serré (1I, 1A) d'environ 1:10 par rapport au diamètre du tube et la surface de butée (2I, 2A) formant un angle Bêta de 10° à 20°, de préférence d'environ 15°, par rapport à la normale à l'axe et la transition (3) entre l'ajustement serré (1) et la butée (2) des parties reliées étant formée pour ceux-ci sans contact avec un espace intermédiaire ou un espace creux (R) par un évidement coaxial (RA) à partir de la surface de paroi interne (3A) dans la partie externe (A), avec pour règle que le quotient entre la longueur dans la direction axiale de la transition (3) réalisée sans contact et la longueur de l'ajustement serré (1) donne une valeur de 0,4 à 0,7.

2. Raccord de tube selon la revendication 1, **caractérisé en ce que** l'évidement (RA) présente, dans la zone de transition (3), en coupe transversale, un profil sans angles (3A).

3. Raccord de tube selon l'une des revendications 1 ou 2, **caractérisé en ce que** la partie tubulaire interne (I) présente une forme ronde au niveau de la transition (3) entre la surface d'ajustement serré (1I) continuée et la surface de butée (2I).

4. Raccord de tube selon l'une des revendications 1 à 3, **caractérisé en ce que** l'évidement coaxial (RA) est formé, dans la partie externe (A), en coupe transversale, de la surface d'ajustement serré (1A) au profil d'évidement (3A), avec un rayon de transition (Ro) de 0,5 à 1,0 mm (Ro = 0,5 à 1,0) et est formé sans arêtes jusqu'à la surface de butée (2A).

5. Raccord de tube selon l'une des revendications 1 à 4, **caractérisé en ce que** le quotient entre la longueur de la transition (3) réalisée sans contact et la longueur de l'ajustement serré (1) donne une valeur de 0,6 à 1,5.

6. Raccord de tube selon la revendication 1, **caractérisé en ce que**, pour des tubes CASING selon API 5CT, qui sont essentiellement des tubages avec un diamètre extérieur supérieur à 11,43 cm (4^{1/2} pouces), le quotient entre la longueur de la transition (3) réalisée sans contact avec la partie tubulaire interne (I) et la longueur de l'ajustement serré (1) donne une valeur de 0,4 à 1,2, de préférence de 0,6 à 1,0.

7. Raccord de tube selon la revendication 1, **caractérisé en ce que**, pour des tubes TUBING selon API 5CT, qui sont essentiellement des tubes montants ou de tubes de transport avec un diamètre extérieur à 11,43 cm (4^{1/2} pouces) et inférieur, par exemple de 4,02 cm (1,66 pouces), le quotient entre la longueur de la transition (3) réalisée sans contact avec la partie tubulaire interne (I) et la longueur de l'ajustement serré (1) donne une valeur de 0,9 à 1,7, de préférence de 1,1 à 1,5.

8. Raccord de tube selon l'une des revendications 1 à 7, **caractérisé en ce que** les parties internes et externes présentent un matériau de tube qui est traité thermiquement au moins dans la zone de raccordement et présentent une résistance de matériau plus élevée.

9. Raccord de tube selon l'une des revendications 1 à 8, **caractérisé en ce que** les surfaces d'ajustement serré (1I, 1A) et/ou les surfaces de butée (2I, 2A) présentent une rugosité de surface selon la norme E inférieure à Ra = 3,2 µm, mais supérieure à Ra = 0,4, déterminée comme une rugosité moyenne selon DIN 4777 ISO/DIN 4287/1.

10. Raccord de tube selon l'une des revendications 1 à 9, **caractérisé en ce que** l'assemblage des parties tubulaires est réalisé à l'aide d'un raccordement vissé.
